# EUROPÄISCHE PATENTSCHRIFT

(11) **EP 0 736 291 B1**
(45) Veröffentlichungstag und Bekanntmachung des Hinweises auf die Patenterteilung: **07.11.2001**
(21) Anmeldenummer: 96101954.4
(22) Anmeldetag: 10.02.1996
(51) Int. Cl.: A61C 19/10

(54) **Zahnhalteplatte**
Teeth supporting plate
Tablette de support pour dents

(30) Priorität: 10.03.1995 DE 19508761
(43) Veröffentlichungstag der Anmeldung: 09.10.1996
(73) Patentinhaber: Ivoclar Vivadent AG, 9494 Schaan (LI)
(72) Erfinder: Foser, Hans Peter, FL-9496 Balzers (LI)
(74) Vertreter: Baronetzky, Klaus, Dipl.-Ing.

(56) Entgegenhaltungen:
- DE-A- 3 831 919
- DE-U- 9 214 839
- US-A- 2 243 583

## Beschreibung

Die Erfindung betrifft eine Zahnhalteplatte gemäß dem Oberbegriff von Anspruch 1.

Derartige Zahnhalteplatten sind seit längerem bekannt. Sie weisen einen im wesentlichen quaderförmigen Plattenkörper auf, der eine Wachsaufnahme bildet, die sich in Form einer im wesentlichen ebenfalls quaderförmigen Nut flach quer über den Plattenkörper erstreckt. Oberhalb und unterhalb der Nut sind dementsprechend vortretende Ober- und Unterstege vorgesehen, die zu Beschriftungszwecken ausgenutzt werden können. Daneben bieten diese Flächen Schutz für die auf der Nut aufzubringenden Zähne, und ermöglichen in ihrer Breite eine Anpassung an unterschiedliche Zahnarten, wie Frontzähne und Backenzähne.

Die Wachsaufnahme wird zur Lagerung der Zähne mit Klebewachs oder einer anderen zähviskosen Massen gefüllt. Anstelle von Wachs können auch andere Stoffe, wie Kunststoffe mit einer gewissen Klebefähigkeit, eingesetzt werden, wobei sich jedoch Wachs am besten bewährt hat. Wachs ist nämlich auf Dauer zähviskos und eignet sich daher besonders gut für die gewünschte Lagerung der Zähne.

In dieses Wachs werden die Zähne in der gewünschten Weise eingedrückt, wodurch sich eine gewisse Vertiefung in der Wachsmasse ergibt. Es ist erwünscht, daß die Zähne bei Bedarf entnommen werden können, aber auch wieder eingesetzt werden können, ohne daß einzelne Zähne sich versehentlich aus der Lagerung in der Wachsmasse lösen.

Die Lagerung in der Wachsmasse hat sich im Grunde über Jahrzehnte bewährt, und ist insbesondere geeigneter als eine Lagerung in geformten Einzelausnehmungen über Klebstoffe, wie sie beispielsweise in der DE-GM 74 03 850 und der DE-OS 29 47 094 vorgeschlagen wurden. Eine derartige Lagerung in einem Zahnhalteplättchen, das gemäß der letztgenannten Offenlegungsschrift auch gebogen sein kann, ist bereits deswegen ungünstig, da die Einzelausnehmungen je an die unterschiedlichen Zahnformen angepaßt werden müssen. Da eine Vielzahl von Zahnformen je in Kombination auf Vorrat gehalten werden müssen, muß auch eine um ein Mehrfacheres größere Anzahl von entsprechenden Zahnhalteplättchen vorrätig gehalten werden, wenn eine ausreichende Abstützung der Zähne gewünscht ist. Wenn hingegen lediglich eine ungefähre Anpassung der Einzelformen an die Zahnform vorgesehen ist, besteht die Gefahr, daß der betreffende Zahn nicht richtig mit dem in einem Näpfchen vorgesehenen Klebemittel in Berührung kommt, oder daß er seitlich so schlecht geführt ist, daß eine sichere Aufnahme nicht gewährleistet ist. Daher hat sich diese Art der Aufnahme nicht durchgesetzt, und üblicherweise wird nach wie vor eine im wesentlichen flach-quaderförmige Wachsaufnahme verwendet.

Zwar ist die Abstützung der Zähne in der Wachsaufnahme von bekannten Zahnhalteplatten mit schmalen Seitenstegen, neben denen zur Kennzeichnung der Zähne separate Bezeichnungsplättchen in die Wachsmasse eingedrückt sind, in der Regel durchaus befriedigend, und mit wenigen Zahnhalteplatten kann bereits sehr unterschiedlichen Zahnformen Rechnung getragen werden. Jedoch müssen eine Vielzahl derartiger Bezeichnungsplättchen angefertigt und entsprechend bedruckt oder sogar geprägt werden, was die Herstellung insgesamt verteuert. Den heutigen Ansprüchen an eine angemessene Produktpräsentation können derartige Zahnhalteplatten zudem nur unzureichend gerecht werden (siehe auch die US-A-2 243 583).

Wachs ist relativ temperaturempfindlich, und bei den bekannten Zahnhalteplatten, die Wachs verwenden, besteht bei höherer Raumtemperatur die Gefahr, daß das Wachs so weich wird, daß Wachsteile an dem entnommenen und wieder einzusetzenden Zahn anhaften. Dies ist nicht nur aus ästhetischen, sondern auch aus hygienischen Gründen unerwünscht und beeinträchtigt die Wiedereinbringung in die Wachsmassen.

Demgegenüber liegt der Erfindung die Aufgabe zugrunde, eine Zahnhalteplatte gemäß dem Oberbegriff von Anspruch 1 zu schaffen, die eine verbesserte Lagerung von Zähnen erlaubt, ohne daß die universelle Verwendbarkeit auch bei unterschiedlichen Zahnsätzen beeinträchtigt wäre, und bei der zudem die Form ansprechender als bei den bekannten Zahnhalteplatten ist und weitere ästhetische und hygienische Gesichtspunkte berücksichtigt werden können.

Diese Aufgabe wird erfindungsgemäß durch Anspruch 1 gelöst. Vorteilhafte Weiterbildungen ergeben sich aus den Unteransprüchen.

Dadurch, daß der Wachsstreifen in der Wachsaufnahme konvex vorgewölbt ist, ergeben sich überraschend mehrere Vorteile: Zum einen erfolgt die Klebung hauptsächlich im unteren Bereich der Lagerung des Zahnes, ohne daß die seitliche Abstützung beeinträchtigt wäre. Durch ein gewisses Aufspreizen wird die Entnahme zudem erleichtert, und es besteht in seitlichen Bereichen der Lagerung des Zahnes eine geringere Reibung und Klebeneigung, so daß vermieden wird, daß auch bei erhöhten Temperaturen Wachsreste am Zahn anhaften. Dennoch dient das Wachsbett zur seitlichen Abstützung und ist nach wie vor optimal an den jeweiligen Zahn angepaßt, so daß wenige unterschiedliche Zahnhalteplatten vorgehalten werden müssen und die Anpassung an die einzelnen Zahnkonfigurationen durch die Wachsaufnahme sichergestellt wird.

Durch die Vorwölbung von Ober- und Untersteg werden zudem die Zähne in ästhetisch ansprechender Weise präsentiert, denn hierdurch wird die natürliche Zahnausrichtung angedeutet, ohne daß beispielsweise die Stapelbarkeit und Lagerung der Zahnhalteplatten beeinträchtigt wäre.

Es versteht sich, daß die Einbringung des Wachsstreifens entweder durch Einlegen oder durch Eingießen erfolgen kann. Die Krümmung ist hierbei derart schwach, daß auch bei eingegossenem Wachsstreifen in die Wachsaufnahme der mittlere Bereich des Bodens der Wachsaufnahme ausreichend von Wachs bedeckt ist, so daß eine sichere Lagerung von Zähnen auch dort gewährleistet ist.

Zudem bietet die Ausgestaltung, die von den vorgewölbten Ober- und Unterstegen gebildet wird, einen verbesserten seitlichen Einblick, sowie ästhetischen Anblick, und man kann vor der Entnahme der Zähne für die anfallende Prothetik den optischen Eindruck der Zähne auch in Seitenansicht beurteilen.

Dadurch, daß auch der Boden der Wachsaufnahme vorgewölbt ist, ist es nicht erforderlich, die seitlichen und dickeren Zähne tiefer einzudrücken und damit eine zumindest gerade Ausrichtung der Zähne zu erzielen. Da die dickeren Zähne nicht tiefer eingedrückt werden müssen, läßt sich insgesamt eine gewisse Wachsersparnis bei dem eingelegten Klebewachsstreifen erzielen.

Besonders günstig ist es, daß die erfindungsgemäße Zahnhalteplatte die gleiche Modularität und Anreihbarkeit wie flache Zahnhalteplatten ermöglicht. Auch läßt sie sich hinterschneidungsfrei im Spritzgußverfahren herstellen, wobei im Grunde auch die Herstellung aus einer tiefgezogenen Folie in Betracht kommt.

Gemäß einer besonders bevorzugten Ausgestaltung sind die Wachsaufnahme begrenzende Seitenstege vorgesehen, die bei unterschiedlichen Zahnhalteplatten stets etwa die gleich Breite und Höhe aufweisen und zur seitlichen Stabilisierung beitragen. In diesem Zusammenhang ist es besonders günstig, wenn die Vorwölbung der Ober- und Unterstege im mittleren Bereich etwa der Höhe der Seitenstege entspricht. Dann lassen sich die Zahnhalteplatten im "Rohzustand", also ohne eingebrachte Wachsmasse und ohne Zähne, wackelfrei aufeinander stapeln, auch wenn beispielsweise unterschiedliche Breiten der Zahnhalteplatten gelagert werden sollen.

Es ist zudem besonders günstig, wenn die Bauhöhe der Zahnhalteplatten, aber auch die Erstreckung quer zu Längsachse der Wachsaufnahme stets gleich bleibt, so daß die Anreihbarkeit auch unterschiedlicher Zahnhalteplatten, die zusammen ein System für die Auswahl von Zähnen beim Zahntechniker oder Zahnarzt bilden können, verbessert ist.

In diesem Zusammenhang bilden die relativ breiten Seitenstege zudem einen Stoßschutz gegen seitliches Anstossen der Zähne bei aneinander angereihten Zahnhalteplatten und vermitteln darüberhinaus in Verbindung mit den unterschiedlich breiten Ober- und Unterstegen einen ästhetisch gelungenen Eindruck, der zudem bei entsprechender Mehrfachanordnung der Zahnhalteplatten ein optisch einheitlich wirkendes Gesamtbild ergibt. Ferner bieten sie genügend Platz für die Anbringung einer Beschriftung zur Kennzeichnung der Zähne, und separate Bezeichnungsplättchen sind damit entbehrlich.

Der Modularität wird auch durch sehr unterschiedliche Zahnarten und -größen kein Abbruch getan, wenn beispielsweise in einem System Kinder-Schneidezähne zusammen mit Molaren für Erwachsene präsentiert werden sollen. Den unterschiedlichen Größen kann leicht durch eine entsprechend unterschiedliche Breite und Tiefe der Wachsaufnahme Rechnung getragen werden, wobei die Breite von Ober- und Unterstegen die Breite der Wachsaufnahme je kompensieren kann, so daß die Gesamt-Außenabmessungen in dieser Richtung stets gleich bleiben.

Die Stabilität, aber auch die ansprechende Form wird durch das Anschließen der Seitenstege an die Ober- und Unterstege auf unterschiedlicher Höhe begünstigt, wobei es sich versteht, daß hier am Übergang bei Bedarf ein kleiner Radius eingesetzt werden kann. Durch die Schrägstellung der Innenschenkel der Seitenstege ergibt sich nicht nur ein an den Radius von Ober- und Untersteg angepaßtes, ästhetisch gelungenes Gepräge der Zahnhalteplättchen, sondern auch eine leichte Einbringbarkeit - und, bei Bedarf, Entnehmbarkeit - des Wachsstreifens mit den Zähnen. In diesem Zusammenhang ist es bevorzugt, wenn die Innenschenkel der Ober- und Unterstege, die die Wachsaufnahme in ihrer Breite begrenzen, im wesentlichen senkrecht verlaufen, so daß der Wachsstreifen nicht versehentlich verloren geht. Zudem ist die Stabilität des Plattenkörpers der Zahnhalteplatte durch die Ausgestaltung mit im wesentlichen senkrechten Innen- und Außenschenkeln verbessert, was insbesondere beim starken Aufdrücken der Zähne beim Wiedereinsetzen in den Wachsstreifen relevant ist. In diesem Zusammenhang ist es wichtig, daß sich das Plättchen nicht durch das Aufdrücken in sich verformt, denn durch eine Verformung bestünde die Gefahr, daß die neben dem soeben erneut eingedrückten Zahn befindlichen Zähne in ihren jeweiligen Aufnahmen praktisch herausgedrückt werden, oder sich zumindest lockern.

In diesem Zusammenhang ist es besonders günstig, wenn die Ober- und Unterstege seitlich neben der Wachsaufnahme Stützflansche aufweisen, die bis nach ganz unten, also bis zur Unterlage für die Zahnhalteplatte reichen. Derartige Stege steifen die Zahnhalteplatte in solchem Maße aus, daß mit einer relativ geringen Materialstärke gearbeitet werden kann.

Es versteht sich, daß die Radien von Boden-, Ober- und Untersteg sowie die Breite der Zahnhalteplatte in weiten Bereichen an die Erfordernisse angepaßt werden können. Beispielsweise kann auch der Radius des Bodens der Wachsaufnahme erheblich größer und sogar zumindest nahezu gerade ausgestaltet sein, wobei die Krümmung von Ober- und Unterstegen die Entnahme erleichtert und die erfindungsgemäß besonders gute Abstützung gewährleistet ist.

Weitere Vorteile, Einzelheiten und Merkmale ergeben sich aus der nachstehenden Beschreibung eines Ausführungsbeispiels anhand der Zeichnung.

Es zeigen:
- Fig. 1: eine Draufsicht auf eine Ausführungsform einer erfindungsgemäßen Zahnhalteplatte;
- Fig. 2: einen Schnitt durch die Zahnhalteplatte gemäß Fig. 1, entlang der Linie II-II aus Fig. 4;
- Fig. 3: einen Schnitt der Zahnhalteplatte in der Ausführungsform gemäß Fig. 1, entlang der Linie III-III aus Fig.4;
- Fig. 4: eine Unteransicht der Zahnhalteplatte gemäß Fig. 1; und
- Fig. 5: einen Schnitt entlang der Linie V-V gemäß Fig. 1.

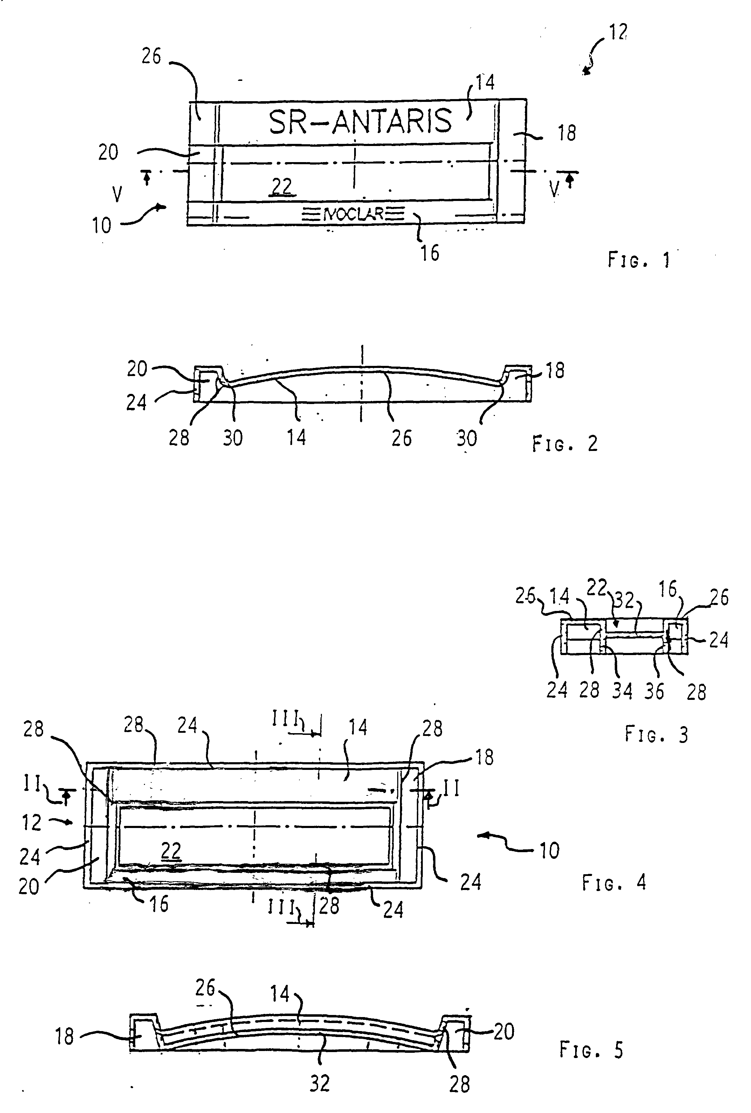

Die in Fig. 1 dargestellte Ausführungsform einer Zahnhalteplatte 10 weist einen Plattenkörper 12 auf, der für die Aufnahme von nicht dargestelltem Wachs ausgebildet ist, in welches ebenfalls nicht dargestellte Zähne eingebracht werden können. Der Plattenkörper 12 weist einen Obersteg 14 und einen Untersteg 16 sowie zwei Seitenstege 18 und 20 auf. In dem Bereich zwischen diesen Stegen 14 bis 20 erstreckt sich eine Wachsaufnahme 22. Es versteht sich, daß hier unter Wachsaufnahme eine im wesentlichen flach quaderförmige Aufnahme für eine Klebemasse zu verstehen ist, die vollflächig den Bereich zwischen den Stegen 14 bis 20 ausfüllt und nicht auf Wachs im chemischen Sinne beschränkt ist.

Im Beispielsfalle ist der Obersteg 14 etwas breiter als der Untersteg 16. Es versteht sich, daß die Abmessungen nach Bedarf gewählt werden können und beispielsweise der gewünschten Beschriftung - wie aus Fig. 1 ersichtlich ist - Rechnung tragen können.

Sämtliche Stege weisen, wie aus Fig. 3 besser ersichtlich ist, Außenschenkel 24, Mittelschenkel 26 sowie Innenschenkel 28 auf und haben dementsprechend einen im wesentlichen U-förmigen Grundaufbau und sind hohl. Diese Ausgestaltung kommt der Stabilität des Plattenkörpers 12 zugute.

Wie aus Fig. 2 besser ersichtlich ist, weist der Obersteg 14 einen konvex vorgewölbten Grundaufbau mit einem entsprechend vorgewölbten Mittelschenkel 26 auf. Die Vorwölbung erfolgt so weit, daß die Höhe des Oberstegs 14 in der Mitte etwa gleich hoch wie die Höhe der Seitenschenkel 18 und 20 ist. In seitlichen Bereichen springt der Obersteg 14 - und ebenso der in ähnlicher Weise ausgebildete Untersteg 16 - dementsprechend zurück. Beim Übergang zum Seitensteg ist jeweils ein Radius 30 vorgesehen, der den Mittelschenkel 26 des Obersteges 14 mit dem Innenschenkel 28 der Seitenstege 18 und 20 verbindet. Dieser Innenradius 30 kann in der Größenordnung von 0,5 bis 5 mm, insbesondere etwa 1,5 bis 2 mm, vorgesehen sein und ermöglicht das sanfte Anschließen der Stege aneinander. Der Innenschenkel 28 der Seitenstege 18 und 20 verläuft etwas schräg und etwa in Fortsetzung des Radius' der Vorwölbung des Oberstegs 14. Wie aus Fig. 5 besser ersichtlich ist, setzt sich der Innenschenkel 28 des Seitenstegs 18 bzw. 20 zum Boden 32 der Wachsaufnahme 22 in gleicher Weise fort.

Aus Fig. 3 in Verbindung mit den Figuren 1 und 2 ist der insgesamt kastenförmige Aufbau des erfindungsgemäßen Plattenkörpers ersichtlich. Trotz der aus Fig. 2 und 5 ersichtlichen Wölbung sind die Außenabmessungen des Plattenkörpers 12 - abgesehen von den als Einkerbungen wirkenden Krümmungen seitlich neben den Seitenstegen 18 und 20 - im Grunde flachquaderförmig, was der Handhabbarkeit und Anreihbarkeit entscheidend zugute kommt. Die Länge der Zahnhalteplatte kann beispielsweise 59 mm ± 4 mm für eine Zahnhalteplatte für sechs Zähne, insbesondere Frontzähne, betragen, und 86 mm ± 4 mm für eine Zahnhalteplatte für acht Zähne, insbesondere für Molare und Prämolare. Die Breite, also die Erstreckung quer über Ober- und Unterstege 14, 16 beträgt in beiden Fällen 22,5 mm. Mit diesen Abmessungen läßt sich ein modular anreihbares Konzept verwirklichen.

Wie aus Fig. 3 ferner ersichtlich ist, ist der Boden 32 durch Stützflansche 34 und 36 seitlich benachbart zu den Stegen 14 und 16 abgestützt. Auch bei großer Kraftaufbringung beim Einsetzen von Zähnen verformt sich demnach der Plattenkörper nicht. Es versteht sich, daß anstelle der seitlichen Abstützung des Bodens 32 auch eine mittige Abstützung möglich ist, auch wenn dies hier nicht dargestellt ist.

Auch die Außenschenkel 24 der Stege 14 und 16 sind je bis nach ganz unten gezogen und dienen der Abstützung auf einer Unterlage, die hier nicht dargestellt ist.

Aus Fig. 4 ist ersichtlich, daß die Zahnhalteplatte 10 von hinten offen ist und in auf einer Unterlage liegender Form mehrere Hohlräume abdeckt. Die Verwendung aus profiliertem Hohlmaterial kommt der Stabilität im Verhältnis zur Gewichtsersparnis und damit zugleich den Herstellkosten zugute. Hier wie auch in den weiteren Figuren sind gleiche Teile mit gleichen Bezugszeichen bezeichnet.

Es ist ersichtlich, daß bei dem dargestellten Ausführungsbeispiel die Wachsaufnahme 22 etwas weniger als die Hälfte der Gesamtfläche der Zahnhalteplatte 10 einnimmt. Es versteht sich, daß dieser Anteil in weiten Bereichen an die Erfordernisse anpaßbar ist und insbesondere erheblich mehr als die Hälfte betragen kann.

Wie aus Fig. 5 ersichtlich ist, weisen die Stege 14 und 16, von denen der Obersteg 14 aus Fig. 5 ersichtlich ist, eine Krümmung auf, die der Krümmung des Bodens 32 angenähert ist. Der Abstand zwischen dem Boden 32 und dem Mittelschenkel 26 des Steges bleibt über die Längserstreckung der Wachsaufnahme 22 bei dieser Ausgestaltung konstant, so daß ein flacher Wachsstreifen einsetzbar ist und leicht an die sanfte Krümmung des Bodens 32 und der Stege 14 und 16 angepaßt werden kann.

Bei Bedarf kann auch im Innenschenkel 28, Seitensteg 18 und 20 je eine Hinterschneidung vorgesehen sein. Diese ermöglicht die Verankerung des gewölbten Wachsstreifens in der Wachsaufnahme 22, was dann relevant werden kann, wenn ein Wachs mit weniger stark ausgeprägten Klebeeigenschaften für die Wachsaufnahme verwendet wird.

## Patentansprüche

1. Zahnhalteplatte, mit einem Plattenkörper und einer Wachsaufnahme für die Aufnahme einer zähviskosen Masse, wie Wachs, in welche eine Mehrzahl von Zähnen nebeneinander eindrückbar ist, wobei die Wachsaufnahme (22) von konvex vorgewölbten Ober- und Unterstegen (14, 16) begrenzt ist und die zähviskose Masse eine konvex vorgewölbte Oberfläche aufweist, **dadurch gekennzeichnet, daß** mindestens einer der vorgewölbten Ober- oder Unterstege (14, 16) eine Mittenhöhe aufweist, die etwa der Höhe der Seitenstege (18, 20) entspricht oder knapp unter deren Höhe ist.

2. Zahnhalteplatte nach Anspruch 1, **dadurch gekennzeichnet, daß** die Wachsaufnahme (22) einen konvex vorgewölbten Boden (32) aufweist und insbesondere die Tiefe der Wachsaufnahme gegenüber der Oberfläche der Ober- und Unterstege über die Länge der Wachsaufnahme (22) im wesentlichen gleich ist.

3. Zahnhalteplatte nach einem der vorhergehenden Ansprüche, **dadurch gekennzeichnet, daß** die Wachsaufnahme (22) an ihren Enden von Seitenstegen (18, 20) begrenzt ist, die sich an die Ober- und Unterstege (14, 16) je anschließen und daß insbesondere sowohl die Seitenstege als auch die Ober- und Unterstege (14, 16) innen hohl sind.

4. Zahnhalteplatte nach einem der vorhergehenden Ansprüche, **dadurch gekennzeichnet, daß** mindestens einer der vorgewölbten Ober- oder Untersteg (14, 16) eine Mittenhöhe aufweist, die etwa der Höhe der seitenstege (18, 20) entspricht oder knapp unter deren Höhe ist.

5. Zahnhalteplatte nach einem der vorhergehenden Ansprüche, **dadurch gekennzeichnet, daß** die Breite von Untersteg (16) und Obersteg (14) etwas unterschiedlich ist und insbesondere zwischen 10 und 100 %, bevorzugt zwischen 16 und 70 %, der Breite der Wachsaufnahme (22) beträgt.

6. Zahnhalteplatte nach einem der vorhergehenden Ansprüche, **dadurch gekennzeichnet, daß** die Zahnhalteplatte (10) gegenüber einer weiteren Zahnhalteplatte, insbesondere hinsichtlich der Länge und des Radius' der konvex vorgewölbten Ober- und Unterstege (14, 16) unterschiedlich ist und daß die Höhe der Zahnhalteplatten im wesentlichen gleich ist.

7. Zahnhalteplatte nach einem der vorhergehenden Ansprüche, **dadurch gekennzeichnet, daß** die Zahnhalteplatte (10) gegenüber einer weiteren Zahnhalteplatte unterschiedlich ist und daß die Erstreckung der Zahnhalteplatten (10) quer zur Wachsaufnahme (22), also über die Ober- und Unterstege (14, 16), im wesentlichen gleich ist.

8. Zahnhalteplatte nach einem der vorhergehenden Ansprüche, **dadurch gekennzeichnet, daß** die Zahnhalteplatte (10) gegenüber einer weiteren Zahnhalteplatte unterschiedlich ist und daß die Erstreckung der Zahnhalteplatten (10) quer zur Wachsaufnahme (22), also über die Ober- und Unterstege (14, 16), im wesentlichen gleich ist und die Wachsaufnahme (22) bei Backenzähnen breiter und tiefer und bei Schneidezähnen schmaler und weniger tief ist und insbesondere Backenzahn-Zahnhalteplatten einen flachen Boden (32) aufweisen.

9. Zahnhalteplatte nach einem der vorhergehenden Ansprüche, **dadurch gekennzeichnet, daß** die Zahnhalteplatte (10) gegenüber einer weiteren Zahnhalteplatte unterschiedlich ist, wobei anschließend an die Ober- und Unterstege (14, 16) die Länge der Wachsaufnahme (22) begrenzend Seitenstege (18, 20) vorgesehen sind, deren Breite bei unterschiedlichen Zahnhalteplatten (10) stets im wesentlichen gleich ist.

10. Zahnhalteplatte nach einem der vorhergehenden Ansprüche, **dadurch gekennzeichnet, daß** die Zahnhalteplatte (10) gegenüber einer weiteren, für die Aufnahme von Backenzähnen und Frontzähnen geeigneten Zahnhalteplatte unterschiedlich ist, wobei der Radius der vorgewölbten Ober- und Unterstege (14, 16) bei einer Zahnhalteplatte (10) im wesentlichen gleich ist und bei breiteren Zahnhalteplatten größer und bei schmaleren Zahnhalteplatten kleiner ist.

11. Zahnhalteplatte nach einem der vorhergehenden Ansprüche, **dadurch gekennzeichnet, daß** der Radius der vorgewölbten Ober- und Unterstege (14, 16) zwischen etwa 50 mm und etwa 500 mm, bevorzugt zwischen 70 und 300 mm und insbesondere zwischen 80 und 120 mm für schmalere Zahnhalteplatten sowie zwischen 220 und 260 mm für breitere Zahnhalteplatten, beträgt.

12. Zahnhalteplatte nach einem der vorhergehenden Ansprüche, **dadurch gekennzeichnet, daß** der Radius der vorgewölbten Ober- und/oder Unterstege (14, 16) um weniges, insbesondere um 1 bis 10 mm, bevorzugt um etwa 1,5 bis 3 mm, größer als der Radius des Bodens (32) der Wachsaufnahme (22) ist.

13. Zahnhalteplatte nach einem der vorhergehenden Ansprüche, **dadurch gekennzeichnet, daß** die Ober- und Unterstege (14, 16) einen Kreisbogen von 20 bis 45°, insbesondere etwa 24 bis 30° aufspannen.

14. Zahnhalteplatte nach einem der vorhergehenden Ansprüche, **dadurch gekennzeichnet, daß** die Stege (14, 16, 18, 20) aus einem nach vorne weisenden Mittelschenkel (26), einem zur Wachsaufnahme (22) weisenden Innenschenkel (28) und einem die Außenabmessungen der Zahnhalteplatte begrenzenden Außenschenkel (24) bestehen.

15. Zahnhalteplatte nach Anspruch 14, **dadurch gekennzeichnet, daß** die Innenschenkel (28) der Seitenstege (18, 20) sich im wesentlichen lotrecht zu den angrenzenden Flächen der Ober- und Unterstege (14, 16) und insbesondere von diesen weg erstrecken.

16. Zahnhalteplatte nach einem der Ansprüche 14 oder 15, **dadurch gekennzeichnet, daß** am Übergang zwischen dem Innenschenkel (28) der Seitenstege (18, 20) und dem Mittelschenkel (26) der Ober- und Unterstege (14, 16) ein Innenradius (30) vorgesehen ist.

17. Zahnhalteplatte nach einem der vorhergehenden Ansprüche, **dadurch gekennzeichnet, daß** die Außenschenkel (24) der Ober- und Unterstege (14, 16) und die Außenschenkel (24) der Seitenstege (18, 20) im wesentlichen rechtwinklig zueinander ausgebildet sind und die Zahnhalteplatte (10) von ihren Außenabmessungen her einen kastenförmigen Grundaufbau aufweist.

18. Zahnhalteplatte nach einem der vorhergehenden Ansprüche, **dadurch gekennzeichnet, daß** die Ober- und Unterstege (14, 16) einen sich in Richtung auf eine Unterlage über den Boden (32) hinaus nach unten erstreckenden Stützflansch (34, 36) aufweisen, mit welchem der Boden (32) auf der Unterlage abstützbar ist.

19. Zahnhalteplatte nach einem der vorhergehenden Ansprüche, **dadurch gekennzeichnet, daß** ein Stützflansch (34, 36) für den Boden der Wachsaufnahme (22) in Verlängerung des Innenschenkels (28) und/oder des Außenschenkels (24) der Ober- und Unterstege (14, 16) gebildet ist.

20. Zahnhalteplatte nach einem der vorhergehenden Ansprüche, **dadurch gekennzeichnet, daß** die Außenschenkel (24) aller Stege (14, 16, 18, 20) vollständig nach unten in Richtung auf eine Unterlage durchgezogen sind und eine Auflagefläche auf dieser Unterlage bieten.

## Claims

1. A dental support plate, having a plate body and a wax receptacle for receiving a viscous compound, such as wax, into which a plurality of teeth can be pressed side by side, wherein the wax receptacle (22) is bounded by convex arcuately curved upper and lower webs (14,16) and the viscous compound has a convex arcuately curved surface, **characterised in that** at least one of the arcuately curved the upper or lower webs (14,16) have a centre height which corresponds approximately to the height of the lateral webs (18,20) or is just below their height.

2. A dental support plate according to Claim 1, **characterised in that** the wax receptacle (22) has a convex arcuately curved bottom (32) and, in particular, the depth of the wax receptacle in relation to the surface of the upper and lower webs is substantially the same over the length of the wax receptacle (22).

3. A dental support plate according to any one of the preceding Claims, **characterised in that** the wax receptacle (22) is bounded at its ends by lateral webs (18,20) which respectively adjoin the upper and lower webs (14,16), and **in that** particularly both the lateral webs and the upper and lower webs (14,16) are hollow internally.

4. A dental support plate according to any one of the preceding Claims, **characterised in that** at least one of the arcuately curved upper and lower webs (14,16) has a centre height which corresponds approximately to the height of the lateral webs (18,20) or is just below their height.

5. A dental support plate according to any one of the preceding claims, **characterised in that** the width of the lower web (16) and upper web (14) is slightly different and, in particular, is between 10 and 100 %, preferably 16 and 70 %, of the width of the wax receptacle (22).

6. A dental support plate according to any one of the preceding claims, **characterised in that** the dental support plate (10) differs from a further dental support plate, in particular with respect to the length and radius of the convex arcuately curved upper and lower webs (14,16), and **in that** the height of the dental support plates is substantially the same.

7. A dental support plate according to any one of the preceding Claims, **characterised in that** the dental support plate (10) differs from a further dental support plate and **in that** the extension of the dental support plates (10) transversely to the wax receptacle (22), i.e. over the upper and lower webs (14,16), is substantially the same.

8. A dental support plate according to any one of the preceding Claims, **characterised in that** the dental support plate (10) differs from a further dental support plate and **in that** the extension of the dental support plates (10) transversely to the wax receptacle (22), i.e. over the upper and lower webs (14,16), is substantially the same, and the wax receptacle (22) is wider and deeper in the case of molar teeth and is narrower and less deep in the case of incisors, and in particular molar-dental support plates have a flat bottom (32).

9. A dental support plate according to any one of the preceding Claims, **characterised in that** the dental support plate (10) differs from a further dental support plate, wherein adjacent the upper and lower webs (14,16) lateral webs (18,20) are provided delimiting the length of the wax receptacle (22), the width of which lateral webs is always substantially the same with different dental support plates (10).

10. A dental support plate according to any one of the preceding Claims, **characterised in that** the dental support plate (10) differs from a further dental support plate suitable for receiving molars and front teeth, wherein the radius of the arcuately curved upper and lower webs (14,16) is substantially the same with a dental support plate (10) and is larger with wider dental support plates and is smaller with narrower dental support plates.

11. A dental support plate according to any one of the preceding Claims, **characterised in that** the radius of the arcuately curved upper and lower webs (14,16) is between approximately 50 mm and approximately 500 mm, preferably between 70 and 300 mm and, in particular, between 80 and 120 mm for narrower dental support plates and between 220 and 260 mm for wider dental support plates.

12. A dental support plate according to any one of the preceding Claims, **characterised in that** the radius of the arcuately curved upper and/or lower webs (14,16) is slightly larger, in particular by 1 to 10 mm, preferably by approximately 1.5 to 3 mm, than the radius of the bottom (32) of the wax receptacle (22).

13. A dental support plate according to any one of the preceding Claims, **characterised in that** the upper and lower webs (14,16) extend over a circular arc of 20 to 45°, in particular approximately 24 to 30°.

14. A dental support plate according to any one of the preceding Claims, **characterised in that** the webs (14,16,18,20) comprise a forwardly facing centre arm (26), an inner arm (28) facing towards the wax receptacle (22) and an outer arm (24) delimiting the outer dimensions of the dental support plate.

15. A dental support plate according to Claim 14, **characterised in that** the inner arm (28) of the lateral webs (18,20) extend substantially perpendicular to the adjoining surfaces of the upper and lower webs (14,16) and in particular away therefrom.

16. A dental support plate according to Claim 14 or Claim 15, **characterised in that** an inner radius (30) is provided at the transition between the inner arm (28) of the lateral webs (18,20) and the centre arm (26) of the upper and lower webs (14,16).

17. A dental support plate according to any one of the preceding Claims, **characterised in that** the outer arms (24) of the upper and lower webs (14,16) and the outer arms (24) of the lateral webs (18,20) are formed substantially at right angles to one another and from its outer dimensions the dental support plate (10) has a box-like basic structure.

18. A dental support plate according to any one of the preceding Claims, **characterised in that** the upper and lower webs (14,16) have a supporting flange (34,36) extending downwards towards a base beyond the bottom (32), with which flange the bottom (32) can be supported on the base.

19. A dental support plate according to any one of the preceding Claims, **characterised in that** a supporting flange (34,36) is formed for the bottom of the wax receptacle (22) in extension of the inner arm (28) and/or of the outer arm (24) of the upper and lower webs (14,16).

20. A dental support plate according to any one of the preceding Claims, **characterised in that** the outer arms (24) of all the webs (14,16,18,20) are extended fully downwards towards a base and provide a contact surface on this base.

## Revendications

1. Tablette de support pour dents comportant un corps de tablette et un logement de cire destiné à recevoir une masse visqueuse, comme de la cire, dans laquelle on peut enfoncer les unes à côté des autres une pluralité de dents, le logement de cire (22) étant délimité par un rebord supérieur (14) et un rebord inférieur (16) bombés de manière convexe et la masse visqueuse présentant une surface bombée de manière convexe, **caractérisée en ce que** l'un au moins des rebords supérieur ou inférieur (14, 16) bombés présente une hauteur au milieu qui correspond sensiblement à la hauteur des rebords latéraux (18, 20) ou est légèrement inférieure à celle-ci.

2. Tablette de support pour dents selon la revendication 1, **caractérisée en ce que** le logement de cire (22) présente un fond (32) bombé de manière convexe et que notamment la profondeur du logement de cire, par rapport à la surface des rebords supérieur et inférieur, est sensiblement constante sur la longueur du logement de cire (22).

3. Tablette de support pour dents selon l'une des revendications précédentes, **caractérisée en ce que** le logement de cire (22) est délimité à ses extrémités par des rebords latéraux (18, 20) qui se raccordent chacun aux rebords supérieur et inférieur (14, 16) et que notamment les rebords latéraux comme les rebords supérieur et inférieur (14, 16) sont creux à l'intérieur.

4. Tablette de support pour dents selon l'une des revendications précédentes, **caractérisée en ce que** l'un au moins des rebords supérieur ou inférieur (14, 16) bombés présente une hauteur au milieu qui correspond sensiblement à la hauteur des rebords latéraux (18, 20) ou est légèrement inférieure à celle-ci.

5. Tablette de support pour dents selon l'une des revendications précédentes, **caractérisée en ce que** la largeur du rebord inférieur (16) et celle du rebord supérieur (14) sont légèrement différentes et représentent en particulier entre 10 et 100%, de préférence entre 16 et 70%, de la largeur du logement de cire (22).

6. Tablette de support pour dents selon l'une des revendications précédentes, **caractérisée en ce que** la tablette de support pour dents (10) est différente d'une autre tablette de support pour dents, en particulier quant à la longueur et au rayon des rebords supérieur et inférieur (14, 16) bombés de manière convexe et que la hauteur des tablettes de support pour dents est sensiblement identique.

7. Tablette de support pour dents selon l'une des revendications précédentes, **caractérisée en ce que** la tablette de support pour dents (10) est différente d'une autre tablette de support pour dents et que l'extension des tablettes de support pour dents (10) transversalement au logement de cire (22), c'est-à-dire sur les rebords supérieur et inférieur (14, 16), est sensiblement identique.

8. Tablette de support pour dents selon l'une des revendications précédentes, **caractérisée en ce que** la tablette de support pour dents (10) est différente d'une autre tablette de support pour dents et que l'extension des tablettes de support pour dents (10) transversalement au logement de cire (22), c'est-à-dire sur les rebords supérieur et inférieur (14, 16), est sensiblement identique et le logement de cire (22) est plus large et plus profond pour des molaires et plus étroit et moins profond pour des incisives et que notamment des tablettes de support de molaires présentent un fond (32) plat.

9. Tablette de support pour dents selon l'une des revendications précédentes, **caractérisée en ce que** la tablette de support pour dents (10) est différente d'une autre tablette de support pour dents, des rebords latéraux (18,20) limitant la longueur du logement de cire (22) étant prévus à la suite des rebords supérieur et inférieur (14, 16), rebords latéraux dont la largeur est pour l'essentiel toujours la même dans des tablettes de support pour dents (10) différentes.

10. Tablette de support pour dents selon l'une des revendications précédentes, **caractérisée en ce que** la tablette de support pour dents (10) est différente d'une autre tablette de support pour dents destinée à recevoir des molaires et des dents de devant, le rayon des rebords supérieur et inférieur (14, 16) bombés étant sensiblement constant dans une tablette de support pour dents (10) et étant plus grand dans des tablettes de support pour dents plus larges, et plus petit dans des tablettes de support pour dents plus étroites.

11. Tablette de support pour dents selon l'une des revendications précédentes, **caractérisée en ce que** le rayon des rebords supérieur et inférieur (14, 16) bombés est compris entre environ 50 et environ 500 mm, de préférence entre 70 et 300 mm et en particulier entre 80 et 120 mm pour des tablettes de support pour dents plus étroites et entre 220 et 260 m pour des tablettes de support pour dents plus larges.

12. Tablette de support pour dents selon l'une des revendications précédentes, **caractérisée en ce que** le rayon des rebords supérieur et/ou inférieur (14, 16) bombés est supérieur de peu au rayon du fond (32) du logement de cire (22), en particulier de 1 à 10 mm, de préférence d'environ 1,5 à 3 mm.

13. Tablette de support pour dents selon l'une des revendications précédentes, **caractérisée en ce que** les rebords supérieur et inférieur (14, 16) définissent un arc de cercle de 20 à 45°, en particulier d'environ 24 à 30°.

14. Tablette de support pour dents selon l'une des revendications précédentes, **caractérisée en ce que** les rebords (14, 16, 18, 20) sont constitués d'une aile centrale (26) dirigée vers l'avant, d'une aile intérieure (28) tournée vers le logement de cire (22) et d'une aile extérieure (24) délimitant les dimensions extérieures de la tablette de support pour dents.

15. Tablette de support pour dents selon la revendication 14, **caractérisée en ce que** les ailes intérieures (28) des rebords latéraux (18, 20) s'étendent pour l'essentiel perpendiculairement aux surfaces adjacentes des rebords supérieur et inférieur (14, 16) et en particulier s'éloignent de celles-ci.

16. Tablette de support pour dents selon l'une des revendications 14 ou 15, **caractérisée en ce qu'**un rayon intérieur (30) est prévu au niveau de la transition entre l'aile intérieure (28) des rebords latéraux (18, 20) et l'aile centrale (26) des rebords supérieur et inférieur (14, 16).

17. Tablette de support pour dents selon l'une des revendications précédentes, **caractérisée en ce que** les ailes extérieures (24) des rebords supérieur et inférieur (14, 16) et les ailes extérieures (24) des rebords latéraux (18, 20) forment entre elles sensiblement un angle droit et la tablette de support pour dents (10) a, du point de vue de ses dimensions extérieures, une structure de base en forme de caisson.

18. Tablette de support pour dents selon l'une des revendications précédentes, **caractérisée en ce que** les rebords supérieur et inférieur (14, 16) comportent une patte d'appui (34, 36) qui s'étend vers le bas, au-delà du fond (32), en direction d'un support et avec laquelle le fond (32) peut prendre appui sur le support.

19. Tablette de support pour dents selon l'une des revendications précédentes, **caractérisée en ce qu'**une patte d'appui (34, 36) pour le fond du logement de cire (22) est formée dans le prolongement de l'aile intérieure (28) et/ou de l'aile extérieure (24) des rebords supérieur et inférieur (14, 16).

20. Tablette de support pour dents selon l'une des revendications précédentes, **caractérisée en ce que** les ailes extérieures (24) de tous les rebords (14, 16, 18, 20) s'étendent vers le bas de manière ininterrompue en direction d'un support et offrent une surface d'appui sur ce support.
